# EUROPÄISCHE PATENTSCHRIFT

(11) **EP 1 606 579 B1**
(45) Veröffentlichungstag und Bekanntmachung des Hinweises auf die Patenterteilung: **21.05.2008**
(21) Anmeldenummer: 04720012.6
(22) Anmeldetag: 12.03.2004
(51) Int. Cl.: G01B 11/24, G01N 21/90

(54) **MANTELFLÄCHENSENSOR SOWIE ABBILDUNGSOPTIK HIERFÜR**
LATERAL SURFACE SENSOR AND IMAGING LENS SYSTEM THEREFOR
DETECTEUR DE SURFACES LATERALES ET OPTIQUE DE REPRODUCTION POUR CE DETECTEUR

(30) Priorität: 18.03.2003 DE 10312051
(43) Veröffentlichungstag der Anmeldung: 21.12.2005
(73) Patentinhaber: VITRONIC Dr.-Ing. Stein Bildverarbeitungssysteme GmbH, 65189 Wiesbaden (DE)
(72) Erfinder: LEHN, Norbert, 65232 Taunusstein (DE); SCHUMACHER, Martin, 65191 Wiesbaden (DE)
(74) Vertreter: Weber, Roland
(86) Internationale Anmeldenummer: PCT/EP2004/050305
(87) Internationale Veröffentlichungsnummer: WO 2004/083777

(56) Entgegenhaltungen:
- EP-A- 0 209 077
- US-A- 5 661 294
- US-A- 6 072 575
- PATENT ABSTRACTS OF JAPAN Bd. 0040, Nr. 58 (P-009), 30. April 1980 (1980-04-30) -& JP 55 027918 A (HITACHI ZOSEN CORP), 28. Februar 1980 (1980-02-28)

## Beschreibung

Die vorliegende Erfindung betrifft eine Abbildungsoptik zum Abbilden der umlaufenden Seitenflächen eines Objektes auf eine Abbildungsebene mit einem reflektierenden Element und einem in Strahlrichtung hinter dem reflektierenden Element angeordneten ersten winkelreduzierenden Element, das den Winkel zwischen einem von dem Objekt ausgehenden Lichtstrahl und der optischen Achse reduziert.

In verschiedenen Produktionsprozessen ist eine Inspektion der umlaufenden Seitenflächen rotationssymmetrischer Objekte notwendig. Beispielsweise müssen die Flaschenhälse von Getränkeflaschen nach dem Abfüllen auf Verunreinigungen hin untersucht werden. Dabei gilt es, das Objekt von allen Seiten zu erfassen, so daß eine einzelne seitlich angeordnete Kamera nicht ausreichend ist.

Sollen Markierungen, beispielsweise Datumsaufdrucke, auf den Seitenflächen von Objekten mit Rotationssymmetrie erfaßt werden, so kann während eines Produktionsprozesses nur mit großern Aufwand sichergestellt werden, daß das Objekt, z. B. auf einem Transportband, so ausgerichtet ist, daß der Aufdruck in Richtung der einen Kamera zeigt.

Versucht man hingegen den gesamten Umfang des Objekts beispielsweise durch Anordnen von vier Kameras, die jeweils einen Umfangswinkel von 90° erfassen, so ist die Auswertung der Bilder vor allem dann erschwert, wenn z. B. der aufgedruckte Schriftzug derart positioniert ist, daß er in Teilen von unterschiedlichen Kameras erfaßt wird. Die Auswertung der von den vier Kameras gewonnenen Informationen ist vor allem in den Überlappungsbereichen sehr aufwendig, da es gerade in diesen Bereichen zu einer erheblichen Verzerrung der Einzelbilder kommt.

Daher finden sich im Stand der Technik Inspektionssysteme, die es erlauben, sowohl die inneren als auch die äußeren umlaufenden Seitenflächen eines Objektes mit einer über dem Objekt angeordneten Kamera mit Hilfe einer symmetrischen Linsen- oder Spiegeloptik zu erfassen.

In der Druckschrift DE 31 09 270 wird beispielsweise ein Inspektionssystem zur Kontrolle von Flaschenhälsen auf Verunreinigungen und Beschädigungen mit einer einzigen Fernsehkamera dargestellt. Dabei besteht die die Außenwand der Flasche abbildende Optik alternativ aus einer Sammellinse mit großem Durchmesser oder einem innenverspiegelten Rohr, das zumindest teilweise über den Flaschenhals geschoben werden kann.

Die DE 42 09 417 zeigt eine optische Prüfvorrichtung für Innengewinde, bei der das Innengewinde mit Hilfe eines Kegelspiegels auf die senkrecht zur Symmetrieachse des Gewindes angeordnete Sensorfläche einer Kamera abgebildet wird.

In der DE 30 35 082 wird ein Inspektionssystem beschrieben, das auch solche Oberflächenbereiche erfassen können soll, die im Schatten der Blickrichtung einer Fernsehkamera liegen. Dazu werden die an der Oberfläche des Objekts reflektierten Lichtstrahlen zunächst symmetrisch zur Rotationsachse des Objekts zweifach mit unterschiedlichem Winkel gespiegelt und bei der zweiten Spiegelung in eine senkrecht zur Rotationsachse liegende Ebene projiziert. Die Spiegelung erfolgt mit Hilfe eines in sich und zur Rotationsachse des Objekts rotationssymmetrischen Spiegelsystems, das aus einem- kegelförmigen Spiegel und einem kegelstumpfförmigen HohlSpiegel besteht Dabei sind die beiden Spiegel konzentrisch um die Rotationsachse des Objekts angeordnet. Die spiegelnde Fläche des kegelförmigen Spiegels ist der Fernsehkamera zugekehrt und gegenüber der Rotationsachse des Objekts stärker geneigt als die spiegelnde Fläche des kegelstumpfförmigen Hohlspiegels, die dem rotationssymmetrischen Objekt zugekehrt ist.

In der auf der DE 30 35 082 aufbauenden DE 197 26 967 wird ein inspektionssystem beschrieben, dessen Umlenkoptil; dahingehend verändert ist, daß sich die außenliegende Reflexionsfläche im wesentlichen rohrförmig um die optische Achse erstreckt und die innenliegende Reflexionsfläche konzentrisch unter Belassung eines Lichtdurchgangs umgibt, wobei die innenliegende Reflexionsfläche einen der außenliegenden Reflexionsfläche entsprechenden Querschnitt senkrecht zur optischen Achse aufweist und in einem zum Objekt hin offenen spitzen Winkel zur optischen Achse verläuft, so daß parallel zur optischen Achse verlaufende Lichtstrahlen von der innenliegenden Reflexionsfläche auf die außenliegende Reflexionsfläche umgelenkt und dort mit einem spitzen Betrachtungswinkel auf die umlaufende Seitenfläche reflektiert werden.

Dem zuvor genannten Stand der Technik ist die Schwierigkeit gemeinsam, daß die beiden konzentrischen Spiegelelemente aufwendig relativ zueinander fixiert werden müssen. Darüber hinaus ist der Akzeptanzwinkel der Spiegeloptik für die vom Objekt ausgehenden Lichtstrahlen durch den Abstand zwischen äußerem und innerem Spiegel begrenzt. Die Begrenzung des Akzeptanzwinkels führt dazu, daß bei der in der DE 197 26 967 beschriebenen Anordnung die vom Objekt ausgehenden Strahlen unter einem flachen Winkel auf die außenliegende Reflexionsfläche treffen. Geringe Abweichungen der Position des Objekts von der symmetrischen Position, in der die Symmetrieachse des Objekts und der Umlenkoptik zusammenfallen, führen daher bereits dazu, daß die Seitenflächen nicht mehr auf die Kamera abgebildet werden.

In der DE 197 26 967 wird darüber hinaus eine Ausführungsform der Vorrichtung beschrieben, bei der die Lichtstrahlumlenkeinrichtung aus einem zylindrischen oder polygonförmigen Prismakörper gebildet wird. Die außenliegende Reflexionsfläche wird von der totalreflektierenden äußere Grenzfläche des Prismakörpers gebildet und die innenliegende Reflexionsfläche von der totalreflektierenden Grenzfläche einer zu dem Objekt hin offenen kegel- oder kegelstumpfförmigen bzw. polygonalen pyramiden- oder pyramidenstumpfförmigen Ausnehmung des Prismakörpers. Die Ausnehmung ist so ausgeführt, daß die vom Objekt ausgehenden Strahlen unter einem rechten Winkel auf die Seitenflächen der Ausnehmung fallen. Bei dieser Ausführungsform des Standes der Technik wird der Akzeptanzwinkel der Umlenkoptik für die einfallenden Lichtstrahlen durch den kritischen Einfallswinkel der Totalreflexion beschränkt. Dieser darf weder bei der Totalreflexion an der äußeren Grenzfläche des Prismakörpers noch bei der Totalreflexion an der Ausnehmung unterschritten werden. Nur sehr flach auf die Grenzflächen des Prismakörpers fallende Lichtstrahlen werden totalreflektiert. Bei diesem Strahlengang führt jedoch eine geringe Verschiebung des Objekts in Bezug auf die optische Achse der Abbildungsoptik bereits dazu, daß nicht mehr das gesamte Bild der Seitenflächen des Objekts auf die Kamera abgebildet wird.

US 5,661,294 offenbart eine Abbildungsoptik, um die Mantelfläche eines zylindrischen Körpers in einer einzige Bildebene abzubilden. Dabei besteht die offenbarte Abbildungsoptik aus einem transparenten Körper mit zwei, die Mantelflächen von Kegelstümpfen definierenden Grenzflächen.

Aus der US 6,072,575 ist weiterhin eine Vorrichtung zur Abbildung des Mündungsbereichs einer Flasche bekannt, wobei eine aus einem komplexen Glaskörper gebildete Abbildungsoptik verwendet wird.

Gegenüber diesem Stand der Technik liegt der Erfindung die Aufgabe zugrunde, eine Abbildungsoptik für die Abbildung der umlaufenden Seitenflächen von Objekten zu schaffen, die sowohl einfach und kostengünstig zu fertigen ist als auch einen großen Akzeptanzwinkel für die einfallende Strahlung aufweist und die tolerant gegenüber einer ungenauen Positionierung des Objekts ist.

Die erfindungsgemäße Aufgabe wird dadurch gelöst, daß die Abbildungsoptik für das Abbilden der umlaufenden Seitenflächen eines Objektes auf eine Abbildungsebene ein reflektierendes Element und ein in Strahlrichtung hinter dem reflektierenden Element angeordnetes erstes winkelreduzierendes Element, das den Winkel zwischen einem von dem Objekt ausgehenden Lichtstrahl und der optischen Achse reduziert, aufweist und daß in Strahlrichtung vor dem reflektierenden Element ein zweites winkelreduzierendes Element angeordnet ist, das den Winkel zwischen einem von dem Objekt ausgehenden Lichtstrahl und der optischen Achse reduziert. Diese Ausgestaltung der Abbildungsoptik ist zweckmäßig, da die in die Abbildungsoptik einfallenden Lichtstrahlen zunächst an dem zweiten winkelreduzierenden Element abgelenkt werden und so ihr Winkel zur optischen Achse reduziert wird. Daher können auch Strahlen, die unter einem flachen Winkel in die Optik eintreten, abgebildet werden.

In einer bevorzugten Ausführungsform weist die Reflexionsfläche des reflektierenden Elements in einer senkrecht zu der optischen Achse verlaufenden Ebene einen rotationssymmetrischen, vorzugsweise kreisförmigen Querschnitt auf. Dies ist vorteilhaft, da eine solche Symmetrie der Symmetrie umlaufender Seitenflächen angepaßt ist. Dies gilt sowohl für Körper mit kreisförmigem oder ovalem Querschnitt als auch für Körper mit nicht orientierten polygonalen Grundflächen. Zweckmäßig ist es dabei, wenn zumindest eines der winkelreduzierenden Elemente in einer senkrecht zu der optischen Achse verlaufenden Ebene ebenfalls einen rotationssymmetrischen, vorzugsweise kreisförmigen Querschnitt hat. Besonders vorteilhaft ist es aber, wenn die beiden winkelreduzierenden Elemente in einer zu der optischen Achse senkrechten Ebene einen rotationssymmetrischen Querschnitt haben.

In einer bevorzugten Ausführungsform der Erfindung wird das zweite winkelreduzierende Element durch eine Grenzfläche eines transparenten Körpers gebildet, so daß die Winkelreduzierung durch die Brechung des Lichtstrahles beim Eintritt des Lichtstrahles in den transparenten Körper erfolgt. Dies erlaubt eine einfache Ausgestaltung des zweiten winkelreduzierenden Elements, da bereits eine plane Fläche eine Brechung in Richtung auf die optische Achse hin bewirkt.

Es ist vorteilhaft, wenn die brechende Grenzfläche des transparenten Körpers mit der optischen Achse einen Winkel zwischen 60° und 120°, vorzugsweise zwischen 80° und 100°, besonders bevorzugt zwischen 85° und 95° und am besten einen Winkel von etwa 90° einschließt. Diese Wahl des Winkels zwischen der Grenzfläche des transparenten Körpers und der optischen Achse in dem genannten Bereich ermöglicht einen optimalen Akzeptanzwinkel der Abbildungsoptik.

In einer bevorzugten Ausführungsform der Erfindung wird die Reflexionsfläche des reflektierenden Elements durch die Grenzfläche eines transparenten Körpers gebildet. Solche transparenten Körper können preiswert mit hoher Oberflächengüte gefertigt werden. Die Reflexion an der Grenzfläche kann aufgrund von interner Totalreflexion erfolgen, so daß keine Verspiegelung der Grenzfläche erfolgen muß. Wird die Grenzfläche hingegen zusätzlich verspiegelt, so vergrößert sich der Akzeptanzwinkel der Abbildungsoptik, da keine Grenzwinkel für die Totalreflexion beachtet werden müssen.

Es ist zweckmäßig, wenn die Grenzflächen, die das reflektierende und das zweite winkelreduzierende Element bilden, Grenzflächen des selben transparenten Körpers sind. Es muß dann nur ein Element gefertigt werden, welches beide Aufgaben erfüllt Besonders bevorzugt wird dabei eine Ausführungsform bei der der transparente Körper ein transparenter Zylinder ist. Ein solches Element läßt sich einfach auch in großen Stückzahlen herstellen und ist aufgrund seiner hohen Symmetrie hervorragend zur Abbildung rotationssymmetrischer Objekte geeignet und kann darüber hinaus auch mit Vorteil zur Abbildung von Objekten an beliebig anderer Symmetrie verwendet werden.

Bevorzugt ist eine Ausführungsform der Erfindung, bei der der transparente Körper aus Glas besteht. Durch die Wahl eines Glases mit entsprechendem Brechungsindex läßt sich die Winkelreduzierung anpassen. Zweckmäßig kann es auch sein, den transparenten Körper aus einem transparenten Kunststoff zu fertigen, so daß die Abbildungsoptik in ihrem Gewicht reduziert wird.

Zweckmäßig ist eine Ausführungsform der Erfindung, bei der das erste winkelreduzierende Element eine reflektierende oder brechende Fläche hat, die derart ausgerichtet ist, daß die Winkeireduzierung durch Reflexion oder Brechung des Lichtstrahls erfolgt.

Besonders bevorzugt wird eine Ausführungsform der Erfindung, bei der die reflektierende oder brechende Fläche des ersten winkelreduzierenden Elements die Mantelfläche eines Kegels oder Kegelstumpfes ist. Eine solche Form ist aufgrund ihrer Symmetrie den rotationssymmetrischen Objekten angepaßt und ermöglicht eine gleichmäßige Ablenkung aller auftreffender Strahlen.

Es ist zweckmäßig, wenn das erste winkelreduzierende Element aus Metall, vorzugsweise Aluminium, besteht und seine reflektierenden Flächen vorzugsweise poliert sind. Ein solches Element läßt sich einfach fertigen und weist bereits eine ausreichende Oberflächengüte für eine aberrationsfreie Abbildung auf. Um besonders hohe Obertlächengüten zu erzielen kann es zweckmäßig sein, das erste winkelreduzierende Element aus Kunststoff oder Glas mit verspiegelten reflektierenden Flächen zu fertigen. Wird das Element aus Kunststoff gefertigt, so ergibt sich zusätzlich eine vorteilhafte Gewichtsreduzierung.

Besonders bevorzugt wird eine Ausführungsform der Erfindung, bei der die Fläche des ersten winkelreduzierenden Elements die Mantelfläche eines Kegelstumpfes ist und die Deckelfläche des Kegelstumpfes eine zentrale Bohrung aufweist. Diese Ausgestaltung ermöglicht es neben der Abbildung der Seitenflächen des Objekts mit Hilfe der Abbildungsoptik auch die Deckelfläche des Objekts mit einem direkten Strahlengang durch das Loch in dem Kegelstumpf auf die Kamera abzubilden. Bei dieser Ausführungsform ist es zweckmäßig, wenn der Glaskörper ebenfalls eine zentrale Bohrung in Verlängerung der zentralen Bohrung des Spiegelkörpers besitzt. Damit ist ein direkter Strahlengang von der Deckelfläche des Objektes zur Kamera möglich ohne Verluste an den reflektierenden Flächen des Glaskörpers.

Es kann zweckmäßig sein, wenn das erste winkelreduzierende Element durch die Grenzfläche eines transparenten Körpers gebildet wird, so daß die Winkelreduzierung durch die Brechung des Lichtstrahles beim Austritt des Lichtstrahles aus dem transparenten Körper erfolgt. Eine solche Ausgestaltung ist besonders dann vorteilhaft, wenn die Grenzflächen der transparenten Körper, die das reflektierende und das erste und das zweite winkelreduzierende Element bilden, Grenzflächen des selben transparenten Körper sind. Die Abbildungsoptik besteht dann nur aus einem Element, das einfach zu montieren ist und nach der Fertigung nicht weiter justiert werden muß.

Bevorzugt wird eine Ausführungsform der Erfindung, bei der das Verhältnis der Durchmessers des ersten winkelreduzierenden Elements zu dem Durchmesser des zweiten winkelreduzierenden Elements kleiner ist als 1 und vorzugsweise zwischen 1/2 und 1/4 beträgt. Eine solche Ausgestaltung ermöglicht eine optimale Abbildung vor allem der Seitenflächen von Deckelkappen mit einem typischen maximalen Durchmesser von ca. 30 mm.

Es ist weiterhin vorteilhaft, wenn die Höhe des transparenten Körpers zwischen 10 mm und 100 mm, vorzugsweise wischen 20 mm und 90 mm, besonders bevorzugt zwischen 30 mm und 80 mm und am Besten etwa 45 mm beträgt.

Besonders zweckmäßig ist eine Ausführungsform der Erfindung, bei der das erste winketreduzierende Element eine Höhe zwischen 5 mm und 35 mm, vorzugsweise zwischen 10 mm und 30 mm, besonders bevorzugt zwischen 15 mm und 25 mm und am Besten eine Höhe von etwa 20 mm hat.

In einer bevorzugten Ausführungsform der Erfindung ist die Abbildungsoptik in einen Mantelflächensensor integriert, der die umlaufenden Seitenflächen eines Objekts mit einem Bildsensor, vorzugsweise einer Kamera erfaßt. Eine solche Anordnung kann in laufende Produktionsprozesse integriert werden um die Seitenflächen von rotationssymmetrischen Objekten zu erfassen und auszuwerten.

In einer besonders bevorzugten Ausführungsform weist der Mantelflächensensor eine Lichtschranke, die die Objekte unter der Abbildungsoptik erfaßt, auf. Dies ermöglicht es, den Zeitpunkt der Aufnahme so zu steuern, daß sich die, sich beispielsweise auf einem Förderband befindenden, Objekte zum Zeitpunkt der Aufnahme unter der Ablenkoptik befinden, so daß die Symmetrieachsen der Abbildungsoptik und des Objekts aufeinanderfallen.

Es kann weiterhin zweckmäßig sein, das der Mantelflächensensor mit einer vorzugsweise ringförmigen, blitzartigen Beleuchtung, die vorzugsweise dafür vorgesehen ist, Lichtblitze zu erzeugen, ausgestattet ist. Dies gewährleistet eine gleichmäßige Helligkeit des von der Kamera auf genommenen Bildes. Alternativ zu einer Beleuchtung mit Lichtblitzen kann es vorteilhaft sein, wenn die Kamera mit einer kurzen Belichtungszeit betrieben werden kann.

Weitere Vorteile, Merkmale und Anwendungsmtiglichkeiten der vorliegenden Erfindung werden anhand der vorliegenden Beschreibung bevorzugter Ausführungsformen und der dazugehörigen Figuren deutlich. Es zeigen:
- Figur 1: eine schematische Darstellung einer ersten Ausführungsform der Erfindung.
- Figur 2: eine seitliche Schnittansicht einer ersten Ausführungsform,
- Figur 3: eine schematische Darstellung einer zweiten Ausführungsform und
- Figur 4: eine schematische Darstellung einer dritten Ausführungsform.

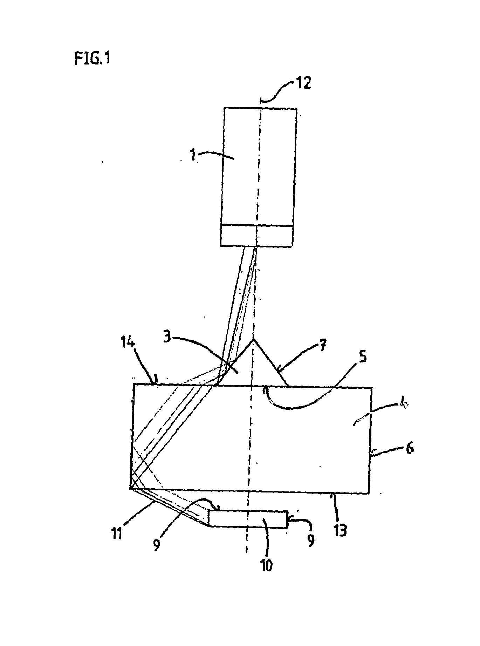

In Figur 1 ist eine Ausführungsform der Abbildungsoptik gezeigt, die einen kegelförmigen Spiegelkörper 3 und einen transparenten zylindrischen Glaskörper 4 aufweist. Die Komponenten sind so angeordnet, daß ihre optischen Achsen 12 mit der Symmetrieachse des ebenfalls zylindrischen Objektes 10 zusammenfallen. Der zylindrische Glaskörper 4 und der kegelförmige Spiegelkörper 3 sind oberhalb des Objektes 10 angeordnet Die von den Seitenflächen 9 des Objekts 10 ausgehenden Lichtstrahlen 11 treten unter einem großen zum Einfallslot hin gemessenen Einfallswinkel in den Glaskörper 4 ein. An der unteren Deckelfläche 13 des Glaskörpers werden die Strahlen 11 gebrochen. Sie treffen daraufhin sehr flach auf die Mantelfläche 6 des Glaskörpers 4. Da sie den kritischen Winkel in Bezug auf das Lot der Mantelfläche überschreiten, werden sie an der Grenzfläche zwischen optisch dichterem und optisch dünnerem Medium totalreflektiert. Dabei erfahren die Strahlen 11 eine Ablenkung auf die Symmetrieachse 12 der Anordnung hin. Die Strahlen 11 treten an der oberen Deckelfläche 14 des Glaskörpers 4 aus dem Glaskörper 4 aus. Dabei erfahren sie eine weitere Brechung in Richtung auf die Symmetrieachse 12. Der kegelförmige Spiegelkörper 3 sitzt direkt auf der oberen Deckelfläche 14 des Glaskörpers 4 und ist vorzugsweise durch Verkleben mit dem Glaskörper 4 verbunden. An der kegelförmigen Mantelfläche 7 des Spiegelkörpers 3 werden die Lichtstrahlen 11 nun so reflektiert, daß sie unter spitzem Winkel auf eine Kamera 1, treffen. Für Objekte mit einem Durchmesser von etwa 33 mm beträgt der Durchmesser des Glaskörpers 4 vorzugsweise 100 mm und der Durchmesser der Grundfläche 5 des kegelförmigen Spiegelkörpers 3 vorzugsweise 30 mm. Um in diesem Fall die etwa 7 mm hohe Mantelfläche 9 des Objekts 10 unter vollständiger Ausnutzung der Auflösung vollständig abbilden zu können, weist der Glaskörper 4 vorzugsweise eine Höhe von 45 mm und der kegelförmige Spiegelkörper 3 vorzugsweise eine Höhe von 20 mm auf. Der Akzeptanzwinkel der Abbildungsoptik für die von den Seitenflächen 9 des Objekts 10 ausgehenden Strahlen beträgt bei dieser Anordnung etwa 63,2 °.

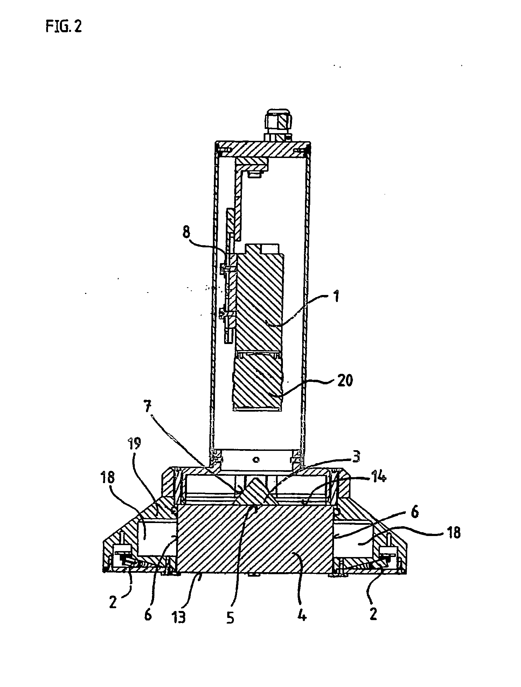

In Figur 2 ist eine seitliche Schnittansicht durch einen Mantelflächensensor gezeigt, der mit der in Figur 1 schematisch dargestellten Abbildungsoptik ausgestattet ist. In der gezeigten Ausführungsform ist ringförmig um den Glaskörper 4 eine Beleuchtung 2 aus periodisch angeordneten Leuchtdioden angebracht. Die Dioden sind so ausgerichtet, daß sie in erster Linie die Mantelfläche 9 des Objekts 10 beleuchten. Bewegen sich die Objekte unter der Abbildungsoptik schnell, so ist es zweckmäßig, die Dioden so zu betreiben, daß sie Lichtblitze erzeugen. In Figur 2 ist deutlich eine Aussparung 18 in dem Gehäuse 19 zu erkennen, die den Glaskörper 4 ringförmig umgibt. Die Aussparung 18 verhindert, daß die Bereiche der Mantelfläche 6 des Glaskörpers 4 mit dem Gehäuse 19 in Berührung,kommen. Auf diese Weise bleibt der für die interne Totalreflexion notwendige Brechungsindexübergang vom optisch dichteren zum optisch dünneren Medium gewährleistet. Darüber hinaus ermöglicht die Aussparung 18 eine Reduzierung des Gewichts des Mantelflächensensors. Oberhalb des kegelförmigen Spiegelkörpers 3 ist in Figur 2 deutlich die Kamera 1 mit dem aufgesetzten Objektiv 20 zu erkennen. Die Kamera 1 ist an einer Halterung 8 in der Höhe verstellbar befestigt. Mit Hilfe der Höhenverstellung der Kamera läßt sich die Apparatur an unterschiedliche Durchmesser des Objekts 10 unter Beibehaltung der Größe der Abbildung anpassen. Je kleiner der Durchmesser des Objekts 10 ist, desto größer muß der Abstand zwischen der Kamera 1 und dem kegelförmigen Spiegelkörper 3 gewählt werden.

In der gezeigten Ausführungsform besteht der transparente Körper 4 aus Glas. Er kann jedoch auch aus einem transparenten Kunststoff, vorzugsweise TPX oder PE, gefertigt werden, um die Masse des Mantelflächensensors zu reduzieren. Der Spiegelkörper 3 wird vorzugsweise aus Aluminium gedreht und die Mantelfläche 7 des Kegels nachträglich poliert.

Die gesamte in Figur 2 gezeigte Vorrichtung wird so gehaltert, daß sie in einer Ebene senkrecht zur Symmetrieachse 12 des Objektes 10 vorzugsweise mit Hilfe eines Motors bewegt werden kann, um die Umlenkachse zentrisch über dem Objekt 10 justieren zu können. In diesem Fall ist eine Ausführungsform der verwendeten Optiken mit geringem Gewicht zweckmäßig.

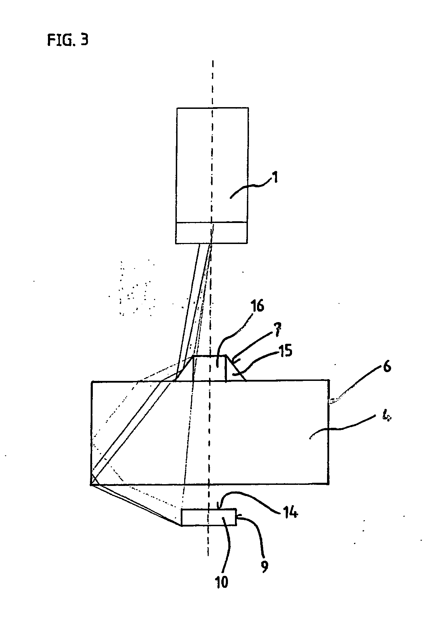

In Figur 3 ist eine zweite Ausführungsform der Erfindung dargestellt, bei der der kegelförmige Spiegelkörper 3 durch einen kegelstumpfförmigen Spiegelkörper 15 ersetzt wurde. Der Kegelstumpf ist mittig mit einer zentrischen Bohrung 16 versehen. Durch die Bohrung 16 wird ein Strahlengang nahe an der optischen Achse 12 eröffnet, der es ermöglicht, zusätzlich zu dem umgelenkten Strahlengang, der von der Seitenflächen 9 des Objektes 10 ausgeht, auch einen von der Deckelfläche 14 des Objekts 10 ausgehenden Strahlengang direkt auf die Kamera 1 abzubilden. Zusätzlich kann (in Figur 3 nicht dargestellt) der Glaskörper 4 ebenfalls mit einer zu der Bohrung 16 in dem kegelstumpfförmigen Spiegelkörper 15 konzentrischen Bohrung versehen werden. Dies reduziert die Reflexionsverluste, die ansonsten an den Deckelflächen des Glaszylinders 4 auftreten.

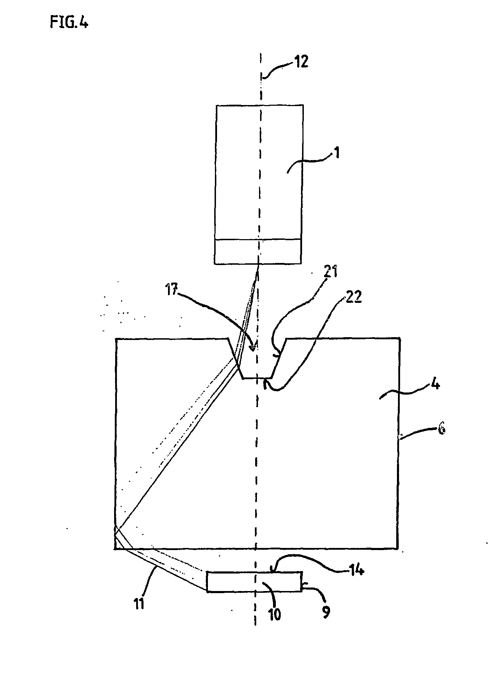

In Figur 4 ist eine dritte Ausführungsform der Erfindung gezeigt, bei der die Abbildungsoptik nur aus einem zylindrischen Glaskörper 4 besteht, der, ausgehend von der oberen Deckelfläche 14, eine zentrische Aussparung 17 in Form eines Kegelstumpfes aufweist. Strahlen, die von den Seitenflächen 9 des Objektes 10 ausgehen, werden beim Eintritt in den Glaskörper 4 durch die untere Deckelfläche 13 so gebrochen, daß sie beim Auftreffen auf die Mantelfläche 6 des Glaskörpers 4 totalreflektiert werden und in Richtung der Symmetrieachse 12 abgelenkt werden. Die Strahlen treten durch die Mantelfläche 21 der kegelstumpfförmigen Ausnehmung 17 in der Dekkelfläche 14 des Glaskörpers 4 aus dem Glaskörper 4 aus. Dabei werden die Strahlen 11 so gebrochen, daß sie unter einem spitzen Winkel auf die Kamera 1 treffen. Gleichzeitig ist ein Strahlengang ausgehend von der Deckelfläche 14 des Objekts 10 durch die Deckelfläche 22 der kegelstumpfförmigen Ausnehmung 17 möglich, der die Deckelfläche 14. des Objekts 10 direkt auf die Kamera 1 abbildet.

### Bezugszeichenliste:

- 1: Kamera
- 2: ringförmige Beleuchtung
- 3: kegelförmiger Spiegelkörper
- 4: zylindrischer Glaskörper
- 5: Grundfläche des Spiegelkörpers
- 6: Mantelfläche des Glaskörpers
- 7: Mantelfläche des Spiegelkörpers
- 8: Halterung
- 9: umlaufende Seitenflächen
- 10: Objekt
- 11: Lichtstrahlen
- 12: optische Achse
- 13: untere Deckelfläche des Glaskörpers
- 14: obere Deckelfläche des Glaskörpers
- 15: kegelstumpfförmiger Spiegelkörper
- 16: zentrale Bohrung
- 17: zentrische Ausnehmung
- 18: Aussparung
- 19: Gehäuse
- 20: Objektiv
- 21: Mantelfläche der Ausnehmung
- 22: Deckelfläche der Ausnehmung

## Patentansprüche

1. Abbildungsoptik für das Abbilden der umlaufenden Seitenflächen (9) eines Objektes (10) auf eine Abbildungsebene mit einem reflektierenden Element (6) und einem in Strahlrichtung hinter dem reflektierenden Element angeordneten ersten winkelreduzierenden Element (3,17), das den Winkel zwischen einem von dem Objekt (10) ausgehenden Lichtstrahl und der optischen Achse (12) reduziert, wobei in Strahlrichtung vor dem reflektierenden Element (6) ein zweites winkelreduzierendes Element (13) angeordnet ist, das den Winkel zwischen einem von dem Objekt (10) ausgehenden Lichtstrahl (11) und der optischen Achse (12) reduziert, wobei das erste winkelreduzierende Element (3) eine reflektierende oder brechende Fläche hat, die eine Mantelfläche eines Kegels oder Kegelstumpfes ist und derart ausgerichtet ist, daß die Winkelreduzierung durch die Reflexion oder Brechung des Lichtstrahles erfolgt, **dadurch gekennzeichnet, daß** die Reflexionsfläche des reflektierenden Elements (6) durch eine Grenzfläche eines transparenten Zylinders gebildet wird.

2. Abbildungsoptik nach Anspruch 1, **dadurch gekennzeichnet, daß** die Reflexionsfläche (6) des reflektierenden Elements (4) in einer senkrecht zu der optischen Achse (12) verlaufenden Ebene einen rotationssymmetrischen, vorzugsweise kreisförmigen Querschnitt hat.

3. Abbildungsoptik nach einem der Ansprüche 1 oder 2, **dadurch gekennzeichnet, daß** zumindest ein winkelreduzierendes Element (3,13) bzw. (17,13) in einer senkrecht zu der optischen Achse (12) verlaufenden Ebene einen rotationssymmetrischen, vorzugsweise kreisförmigen Querschnitt hat.

4. Abbildungsoptik nach Anspruch 1 oder 2, **dadurch gekennzeichnet, daß** die beiden winkelreduzierenden Elemente (3,13) bzw. (17,13) in einer senkrecht zu der optischen Achse (12) verlaufenden Ebene einen rotationssymmetrischen, vorzugsweise kreisförmigen Querschnitt haben.

5. Abbildungsoptik nach einem der Ansprüche 1 bis 4, **dadurch gekennzeichnet, daß** das zweite winkelreduzierende Element durch eine Grenzfläche (13) eines transparenten Körpers gebildet wird, so daß die Winkelreduzierung durch die Brechung des Lichtstrahles beim Eintritt des Lichtstrahles in den transparenten Körper erfolgt.

6. Abbildungsoptik nach Anspruch 5, **dadurch gekennzeichnet, daß** die brechende Grenzfläche (13) mit der optischen Achse (12) einen Winkel zwischen 60° und 120°, vorzugsweise zwischen 80° und 100°, besonders bevorzugt zwischen 85° und 95° und am besten einen Winkel von etwa 90° einschließt.

7. Abbildungsoptik nach einem der Ansprüche 1 bis 6, **dadurch gekennzeichnet, daß** die Reflexion aufgrund der Totalreflexion des Lichtstrahles an der Grenzfläche erfolgt.

8. Abbildungsoptik nach einem der Ansprüche 1 bis 7 soweit von Anspruch 5 abhängig, **dadurch gekennzeichnet, daß** die Grenzflächen (6,13) der transparenten Körper, die das reflektierende Element und das zweite winkelreduzierende Element bilden, Grenzflächen des selben transparenten Körpers (4) sind.

9. Abbildungsoptik nach einem der Ansprüche 1 bis 6 oder 8, **dadurch gekennzeichnet, daß** die Mantelfläche (6) des transparenten Körpers (4) verspiegelt ist.

10. Abbildungsoptik nach einem der Ansprüche 1 bis 9, **dadurch gekennzeichnet, daß** der transparente Körper (4) aus Glas besteht.

11. Abbildungsoptik nach einem der Ansprüche 1 bis 9, **dadurch gekennzeichnet, daß** der transparente Körper (4) aus einem transparenten Kunststoff, vorzugsweise aus TPX oder PE, besteht.

12. Abbildungsoptik nach Anspruch 1, **dadurch gekennzeichnet, daß** das erste winkelreduzierende Element (3) aus Metall, vorzugsweise Aluminium, besteht und seine reflektierenden Flächen (7) vorzugsweise poliert sind.

13. Abbildungsoptik nach Anspruch 1, **dadurch gekennzeichnet, daß** das erste winkelreduzierende Element (3) aus Glas oder Kunststoff besteht und seine reflektierenden Flächen (7) verspiegelt sind.

14. Abbildungsoptik nach Anspruch 1, **dadurch gekennzeichnet, daß** das erste winkelreduzierende Element die Form eines Kegelstumpfes (15) hat, dessen Mantelfläche die reflektierende Fläche (7) bildet, wobei der Kegelstumpf eine durchgehende zentrale Bohrung (16) von der Deckel- bis zur Grundfläche aufweist.

15. Abbildungsoptik nach Anspruch 14 **dadurch gekennzeichnet, daß** der transparente Körper (4) eine im wesentlichen zentrale Bohrung aufweist, die im wesentlichen konzentrisch zu der zentralen Bohrung (16) des ersten winkelreduzierenden Elements (3) angeordnet ist.

16. Abbildungsoptik nach einem der Ansprüche 1 bis 11, **dadurch gekennzeichnet, daß** das erste winkelreduzierende Element (17) durch die Grenzfläche (21) eines transparenten Körpers (4) gebildet wird, so daß die Winkelreduzierung durch die Brechung des Lichtstrahles beim Austritt des Lichtstrahles aus dem transparenten Körper (4) erfolgt

17. Abbildungsoptik nach Anspruch 16 soweit von Anspruch 8 abhängig, **dadurch gekennzeichnet, daß** die Grenzflächen (6,13,21) der transparenten Körper, die das reflektierende Element und das erste und das zweite winkelreduzierende Element bilden, Grenzflächen desselben transparenten Körpers (4) sind.

18. Abbildungsoptik nach einem der Ansprüche 4 bis 17, **dadurch gekennzeichnet, daß** das Verhältnis des Durchmessers der Grundfläche (5) des vorzugsweise als Kegel oder Kegelstumpf ausgebildeten ersten winkelreduzierenden Elements (3,15,17) zu dem Durchmesser des vorzugsweise als Zylinder ausgebildeten reflektierenden Elements (4) kleiner ist als 1 und vorzugsweise zwischen 1/2 und 1/3 beträgt.

19. Abbildungsoptik nach einem der Ansprüche 2 bis 18, **dadurch gekennzeichnet, daß** das Verhältnis des Durchmessers des zu vermessenden Objektes zu dem Durchmesser des reflektierenden Elements (4) kleiner ist als 1, vorzugsweise zwischen 1/5 und 1/2 und am besonders bevorzugt 1/3 beträgt.

20. Abbildungsoptik nach einem der Ansprüche 5 bis 19, **dadurch gekennzeichnet, daß** der transparente Körper (4) eine Höhe zwischen 10 mm und 100 mm, vorzugsweise zwischen 20 mm und 90 mm, besonders bevorzugt zwischen 30 mm und 80 mm und am Besten eine Höhe von etwa 45 mm hat.

21. Abbildungsoptik nach einem der Ansprüche 5 bis 20, **dadurch gekennzeichnet, daß** das erste winkelreduzierende Element (3,17) eine Höhe zwischen 5 mm und 35 mm, vorzugsweise zwischen 10 mm und 30 mm, besonders bevorzugt zwischen 15 mm und 25 mm und am Besten eine Höhe von etwa 20 mm hat.

22. Mantelflächensensor zur Erfassung der umlaufenden Seitenflächen (9) eines Objekts (10) mit einem Bildsensor, vorzugsweise einer Kamera (1), und einer Abbildungsoptik nach einem der Ansprüche 1 bis 21.

23. Mantelflächensensor nach Anspruch 22, **dadurch gekennzeichnet, daß** er eine Lichtschranke aufweist, die die Objekte unter der Abbildungsoptik erfaßt.

24. Mantelflächensensor nach Anspruch 22 oder 23, **dadurch gekennzeichnet, daß** er eine vorzugsweise ringförmige Beleuchtung aufweist, die vorzugsweise dafür vorgesehen ist, Lichtblitze zu erzeugen.

25. Mantelflächensensor nach einem der Ansprüche 22 bis 24, **dadurch gekennzeichnet, daß** die Kamera mit einer kurzen Belichtungszeit betrieben werden kann.

## Claims

1. An imaging optical system for imaging the peripherally extending lateral surfaces (9) of an object (10) on to an imaging plane comprising a reflecting element (6) and a first angle-reducing element (3, 17) which is arranged downstream of the reflecting element in the beam direction and which reduces the angle between a light beam emanating from the object (10) and the optical axis (12), whereas arranged upstream of the reflecting element (6) in the beam direction is a second angle-reducing element (3) which reduces the angle between a light beam (11) emanating from the object (10) and the optical axis (12), whereas the first angle-reducing element (13) has a reflecting or refracting surface which is the peripheral surface of a cone or a truncated cone and so oriented that angle reduction is effected by reflection or refraction of the light beam **characterised in that** the reflection surface of the reflecting element (6) is formed by a boundary surface of a transparent cylinder.

2. An imaging optical system according to claim 1 **characterised in that** the reflection surface (6) of the reflecting element (4) is of a rotationally symmetrical, preferably circular cross-section in a plane extending perpendicularly to the optical axis (12).

3. An imaging optical system according to one of claims 1 and 2 **characterised in that** at least one angle-reducing element (3, 13) or (17, 13) is of a rotationally symmetrical, preferably circular cross-section in a plane extending perpendicularly to the optical axis (12).

4. An imaging optical system according to claim 1 or claim 2 **characterised in that** the two angle-reducing element (3, 13) or (17, 13) are of a rotationally symmetrical, preferably circular cross-section in a plane extending perpendicularly to the optical axis (12).

5. An imaging optical system according to one of claims 1 to 4 **characterised in that** the second angle-reducing element is formed by a boundary surface (13) of a transparent body so that angle reduction is effected by refraction of the light beam when the light beam passes into the transparent body.

6. An imaging optical system according to claim 5 **characterised in that** the refractive boundary surface (13) includes with the optical axis (12) an angle of between 60° and 120°, preferably between 80° and 100°, particularly preferably between 85° and 95° and best an angle of about 90°.

7. An image optical system according to claims 1 to 6 **characterised in that** reflection occurs on the basis of total reflection of the light beam at the boundary surface.

8. An imaging optical system according to claims 1 to 7 insofar as appendant to claim 5 **characterised in that** the boundary surfaces (6, 13) of the transparent bodies which form the reflecting element and the second angle-reducing element are boundary surfaces of the same transparent body (4).

9. An imaging optical system according to claims 1 to 6, or claim 8 **characterised in that** the peripheral surface (6) of the transparent body (4) is mirrored.

10. An imaging optical system according to one of claims 1 to 9 **characterised in that** the transparent body (4) comprises glass.

11. An imaging optical system according to one of claims 1 to 9 **characterised in that** the transparent body (4) comprises a transparent plastic material, preferably TPX or PE.

12. An imaging optical system according to claim 1 **characterised in that** the first angle-reducing element (3) comprises metal, preferably aluminium, and its reflecting surfaces (7) are preferably polished.

13. An imaging optical system according to claim 1 **characterised in that** the first angle-reducing element (3) comprises glass or plastic material and its reflecting surfaces (7) are mirrored.

14. An imaging optical system according to claim 1 **characterised in that** the first angle-reducing element is in the form of a truncated cone (15) whose peripheral surface forms the reflecting surface (7), wherein the truncated cone has a continuous central bore (16) extending therethrough from the cover surface to the base surface.

15. An imaging optical system according to claim 14 **characterised in that** the transparent body (4) has a substantially central bore which is arranged substantially concentrically with respect to the central bore (16) of the first angle-reducing element (3).

16. An imaging optical system according to one of claims 1 to 11 **characterised in that** the first angle-reducing element (17) is formed by the boundary surface (21) of a transparent body (4) so that angle reduction is effected by refraction of the light beam when the light beam issues from the transparent body (4).

17. An imaging optical system according to claim 16 insofar as appendant to claim 8 **characterised in that** the boundary surfaces (6, 13, 21) of the transparent bodies which form the reflecting element and the first and second angle-reducing elements are boundary surfaces of the same transparent body (4).

18. An imaging optical system according to one of claims 4 to 17 **characterised in that** the ratio of the diameter of the base surface (5) of the first angle-reducing element (3, 15, 17) which is preferably in the form of a cone or truncated cone to the diameter of the reflecting element (4) which is preferably in the form of a cylinder is less than 1 and preferably between 1/2 and 1/3.

19. An imaging optical system according to one of claims 2 to 18 **characterised in that** the ratio of the diameter of the object to be measured relative to the diameter of the reflecting element (4) is less than 1, preferably between 1/5 and 1/2 and particularly preferably 1/3.

20. An imaging optical system according to one of claims 5 to 19 **characterised in that** the transparent body (4) is of a height of between 10 mm and 100 mm, preferably between 20 mm and 90 mm, particularly preferably between 30 mm and 80 mm and best a height of about 45 mm.

21. An imaging optical system according to one of claims 5 to 20 **characterised in that** the first angle-reducing element (3, 17) is of a height of between 5 mm and 35 mm, preferably between 10 mm and 30 mm, particularly preferably between 15 mm and 25 mm and at best a height of about 20 mm.

22. A peripheral surface sensor for detecting the peripherally extending lateral surfaces (9) of an object (10) with an image sensor, preferably a camera (1), and an imaging optical system according to one of claims 1 to 21.

23. A peripheral surface sensor according to claim 22 **characterised in that** it has a light barrier arrangement which detects the objects under the imaging optical system.

24. A peripheral surface sensor according to claim 22 or claim 23 **characterised in that** it has a preferably annular lighting means which is preferably provided to produce light flashes.

25. A peripheral surface sensor according to one of claims 22 to 24 **characterised in that** the camera can be operated with a short exposure time.

## Revendications

1. Optique de reproduction pour reproduire les faces (9) latérales circonférentielles d'un objet (10) sur un plan de projection avec un élément (6) réfléchissant et un premier élément (3, 17) réducteur d'angle disposé derrière l'élément réfléchissant dans la direction du faisceau, qui réduit l'angle entre un faisceau lumineux provenant de l'objet (10) et l'axe (12) optique, un second élément (13) réducteur d'angle étant disposé devant l'élément (6) réfléchissant dans la direction du faisceau, qui réduit l'angle entre un faisceau (11) lumineux provenant de l'objet (10) et l'axe optique (12), le premier élément (3) réducteur d'angle possédant une surface réfléchissante ou réfractive, qui est une surface d'enveloppe d'un cône ou d'un cône tronqué et qui est orientée de telle sorte que la réduction d'angle s'effectue par la réflexion ou la réfraction du faisceau lumineux, **caractérisée en ce que** la surface de réflexion de l'élément réfléchissant (6) est formée par une surface de séparation d'un cylindre transparent.

2. Optique de reproduction selon la revendication 1, **caractérisée en ce que** la surface (6) de réflexion de l'élément (4) réfléchissant possède dans un plan s'étendant à la verticale de l'axe (12) optique une section à symétrie de révolution, de préférence circulaire.

3. Optique de reproduction selon l'une quelconque des revendications 1 ou 2, **caractérisée en ce qu'**au moins un élément (3, 13) ou (17, 13) réducteur d'angle possède dans un plan s'étendant à la verticale de l'axe (12) optique une section à symétrie de révolution, de préférence circulaire.

4. Optique de reproduction selon la revendication 1 ou 2, **caractérisée en ce que** les deux éléments (3, 13) ou (17, 13) réducteurs d'angle possèdent dans un plan s'étendant à la verticale de l'axe (12) optique une section à symétrie de révolution, de préférence circulaire.

5. Optique de reproduction selon l'une quelconque des revendications 1 à 4, **caractérisée en ce que** le second élément réducteur d'angle forme au moyen d'une surface (13) de séparation un corps transparent, de telle sorte que la réduction d'angle s'effectue par la réfraction du faisceau lumineux lors de l'entrée du faisceau lumineux dans le corps transparent.

6. Optique de reproduction selon la revendication 5, **caractérisée en ce que** la surface (13) de séparation réfractive avec l'axe (12) optique délimite un angle entre 60° et 120°, de préférence entre 80° et 100°, en particulier de préférence entre 85° et 95° et au mieux un angle d'environ 90°.

7. Optique de reproduction selon l'une quelconque des revendications 1 à 6, **caractérisée en ce que** la réflexion s'effectue en raison de la réflexion totale du faisceau lumineux sur la surface de séparation.

8. Optique de reproduction selon l'une quelconque des revendications 1 à 7, dans la mesure où elle est dépendante de la revendication 5, **caractérisée en ce que** les surfaces (6, 13) de séparation du corps transparent, qui forment l'élément réfléchissant et le second élément réducteur d'angle, sont des surfaces de séparation du même corps (4) transparent.

9. Optique de reproduction selon l'une quelconque des revendications 1 à 6 ou 8, **caractérisée en ce que** la surface (6) de l'enveloppe du corps transparent est pourvue d'une couche réfléchissante.

10. Optique de reproduction selon l'une quelconque des revendications 1 à 9, **caractérisée en ce que** le corps (4) transparent est fabriqué en verre.

11. Optique de reproduction selon l'une quelconque des revendications 1 à 9, **caractérisée en ce que** le corps (4) transparent est fabriqué en matière plastique transparente, de préférence en TPX ou en PE.

12. Optique de reproduction selon la revendication 1, **caractérisée en ce que** le premier élément (3) réducteur d'angle est fabriqué en métal, de préférence en aluminium, et ses faces (7) réfléchissantes sont de préférences polies.

13. Optique de reproduction selon la revendication 1, **caractérisée en ce que** le premier élément (3) réducteur d'angle est fabriqué en verre ou en matière plastique, et ses faces (7) réfléchissantes sont pourvues d'une couche réfléchissante.

14. Optique de reproduction selon la revendication 1, **caractérisée en ce que** le premier élément réducteur d'angle présente la forme d'un cône (15) tronqué, dont la surface de l'enveloppe forme la surface (7) réfléchissante, le cône tronqué présentant un alésage central traversant de bout en bout la surface du couvercle jusqu'à la surface de base.

15. Optique de reproduction selon la revendication 14 **caractérisée en ce que** le corps (4) transparent présente un alésage sensiblement central qui est disposé sensiblement de manière concentrique à l'alésage (16) central du premier élément (3) réducteur d'angle.

16. Optique de reproduction selon l'une quelconque des revendications 1 à 11, **caractérisée en ce que** le premier élément (17) réducteur d'angle forme un corps (4) transparent au moyen de la surface (21) de séparation, de telle sorte que la réduction d'angle s'effectue par la réfraction du faisceau lumineux lors de la sortie du faisceau lumineux du corps (4) transparent.

17. Optique de reproduction selon la revendication 16, dans la mesure où elle est dépendante de la revendication 8, **caractérisée en ce que** les surfaces (6, 13, 21) de séparation du corps transparent, qui forment l'élément réfléchissant et les premier et second éléments réducteurs d'angle, sont des surfaces de séparation du même corps (4) transparent.

18. Optique de reproduction selon l'une quelconque des revendications 4 à 17, **caractérisée en ce que** la proportion du diamètre de la surface (5) de base du premier élément (3, 15, 17) réducteur d'angle formé de préférence en tant que cône ou cône tronqué par rapport au diamètre de l'élément (4) réfléchissant formé de préférence en tant que cylindre est inférieure à 1 et se situe de préférence entre ½ et 1/3.

19. Optique de reproduction selon l'une quelconque des revendications 2 à 18, **caractérisée en ce que** la proportion du diamètre de l'objet devant être mesuré et le diamètre de l'élément (4) réfléchissant est inférieure à 1, de préférence entre 1/5 et 1/2, et en particulier de préférence s'élève à 1/3.

20. Optique de reproduction selon l'une quelconque des revendications 5 à 19, **caractérisée en ce que** le corps (4) transparent présente une hauteur entre 10 mm et 100 mm, de préférence entre 20 mm et 90 mm, en particulier de préférence entre 30 mm et 80 mm et au mieux présente une hauteur d'environ 45 mm.

21. Optique de reproduction selon l'une quelconque des revendications 5 à 20, **caractérisée en ce que** le premier élément (3, 17) réducteur d'angle présente une hauteur entre 5 mm et 35 mm, de préférence entre 10 mm et 30 mm, en particulier de préférence entre 15 mm et 25 mm et au mieux présente une hauteur d'environ 20 mm.

22. Capteur de surface de l'enveloppe pour la détection des surfaces (9) latérales circonférentielles d'un objet (10) avec un capteur d'image, de préférence un appareil photographique (1) et une optique de reproduction selon l'une quelconque des revendications 1 à 21.

23. Capteur de surface de l'enveloppe selon la revendication 22, **caractérisé en ce qu'**il présente une barrière lumineuse, qui détecte les objets sous l'optique de reproduction.

24. Capteur de surface de l'enveloppe selon la revendication 22 ou la revendication 23, **caractérisé en ce qu'**il présente un éclairage de préférence circulaire, qui est prévu de préférence pour produire des éclairs de lumière.

25. Capteur de surface de l'enveloppe selon l'une quelconque des revendications 22 à 24, **caractérisé en ce que** l'appareil photographique peut fonctionner avec un temps de pose court.
